## Europäisches Patentamt
## European Patent Office
## Office européen des brevets

(11) Veröffentlichungsnummer: **0 034 839**
**B1**

(12) **EUROPÄISCHE PATENTSCHRIFT**

(45) Veröffentlichungstag der Patentschrift:
**24.10.84**

(21) Anmeldenummer: **81200024.8**

(22) Anmeldetag: **12.01.81**

(51) Int. Cl.³: **G 01 P 21/02, G 01 P 3/486, G 05 B 9/03, B 60 T 8/00**

(54) **Vorrichtung zum Überwachen eines Raddrehzahlgebers.**

(30) Priorität: **13.02.80 CH 1165/80**

(43) Veröffentlichungstag der Anmeldung:
**02.09.81 Patentblatt 81/35**

(45) Bekanntmachung des Hinweises auf die Patenterteilung:
**24.10.84 Patentblatt 84/43**

(84) Benannte Vertragsstaaten:
**AT BE CH DE FR IT LI NL SE**

(56) Entgegenhaltungen:
**DE - A - 2 546 481**
**US - A - 4 016 432**
**US - A - 4 154 395**

**IBM TECHNICAL DISCLOSURE BULLETIN, Band 18, Nr. 9, Februar 1976, Seiten 2790, 2791 New York, U.S.A. E.C. PISCIOTTA: "Two-phase capstan tachometer check"**

(73) Patentinhaber: **Werkzeugmaschinenfabrik Oerlikon-Bührle AG, Birchstrasse 155, CH-8050 Zürich (CH)**

(72) Erfinder: **Widmer, Eugen, Dipl. Ing., Heugatterstrasse 22a, CH-8600 Dübendorf (CH)**

ACTORUM AG

## Beschreibung

Die Erfindung betrifft eine Vorrichtung zum Überwachen eines Raddrehzahlgebers eines Fahrzeuges, insbesondere eines Schienenfahrzeuges, welcher einen ersten Impulsgeber zur Erzeugung einer ersten raddrehzahlproportionalen Impulsfolge sowie einen zweiten Impulsgeber zur Erzeugung einer zweiten raddrehzahlproportionalen Impulsfolge aufweist, welche gegen die erste Impulsfolge phasenverschoben ist.

Eine bekannte Überwachungsvorrichtung dieser Art (siehe IBM Technical Disclosure Bulletin Vol 18, No. 9, Febr. 1976, Seite 2790, 2791) weist einen Zweiphasen-Tachometer auf. Diese bekannte Vorrichtung hat erstens den Nachteil, dass keine ständige selbsttätige Überwachung des Tachometers erfolgt und dass nur eine der beiden Phasen wahlweise überwacht wird.

Eine andere Überwachungsschaltung dieser Art (siehe DE-A-2 546 481) weist wenigstens zwei verschiedenen Fahrzeugrädern zugeordnete, die Drehgeschwindigkeit erfassende, und ein entsprechendes elektrisches Signal erzeugende Messwertgeber auf, sowie wenigstens eine Vergleichsschaltung, welche die Signale der beiden Messwertgeber miteinander vergleicht.

Diese bekannte Überwachungsschaltung hat den Nachteil, dass nicht ein einzelner Raddrehzahlmesser auf seine Funktionsfähigkeit überprüft werden kann, sondern dass die Funktionsfähigkeit nur im Vergleich mit einem zweiten Raddrehzahlmesser geprüft wird, wobei die beiden Raddrehzahlmesser nicht auf der selben Radachse des Fahrzeuges angeordnet sind.

Die erwähnten bekannten Überwachungsvorrichtungen haben zudem den Nachteil, dass sich beim Erkennen eines Fehlers eine Betriebsunterbrechung nicht vermeiden lässt.

Die Erfindung bezweckt die Schaffung einer Vorrichtung, mit der bei einem Teilausfall der Vorrichtung eine Betriebsunterbrechung vermieden wird.

Die erfindungsgemässe Vorrichtung weist neben den Merkmalen im Oberbegriff auch die Merkmale im Kennzeichen des Patentanspruches 1 auf.

Diese Vorrichtung hat den Vorteil, dass beim Ausfall einer Sonde die Drehzahl eines Rades trotzdem noch mit einer zweiten Sonde gemessen werden kann, und dass die beiden Sonden sich gegenseitig überwachen können.

Ein Ausführungsbeispiel der erfindungsgemässen Überwachungsvorrichtung ist in folgendem anhand der beigefügten Zeichnung ausführlich beschrieben.

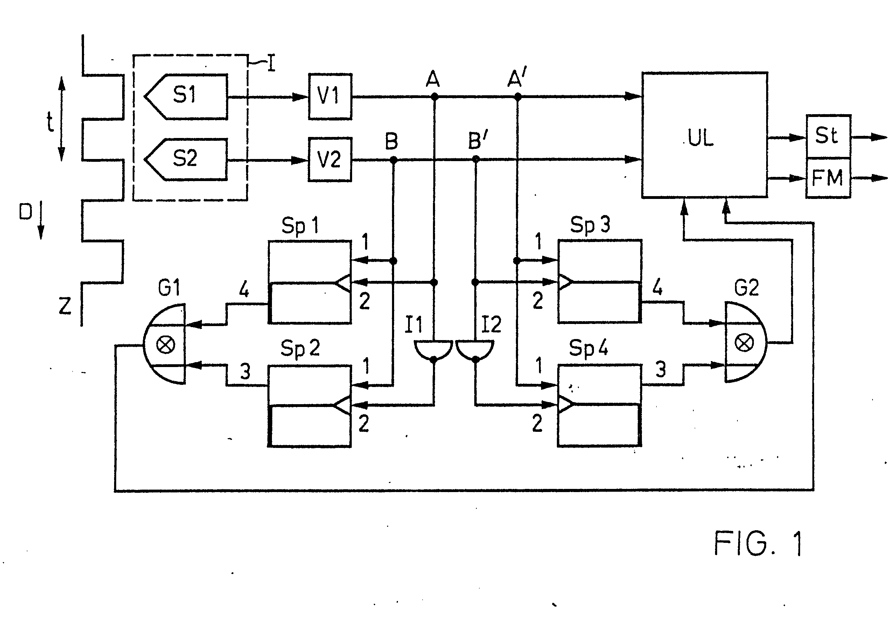

Es zeigt:
Fig. 1 ein Schaltschema der ganzen Einrichtung,
Fig. 2 ein Schaltschema eines Teiles von Fig. 1.
Gemäss der Figur 1 weist die erfindungsgemässe Vorrichtung einen Impulserzeuger Z mit Zähnen auf, der in nicht dargestellter Weise von einem Fahrzeugrad angetrieben wird, oder starr an ihm befestigt ist und dessen Drehzahl somit proportional bzw. gleich der Drehzahl des Fahrzeugrades ist. Im Bereich der Zähne des Impulserzeugers Z befinden sich zwei Sonden S1 und S2, welche zusammen einen Impulsgeber I bilden. Die Sonden S1, S2 können induktiv oder kapazitiv oder fotoelektrisch zusammen mit einem Lichtstrahl die einzelnen Zähne des Impulsgebers Z abtasten. Bei dem vorliegenden Ausführungsbeispiel sind die Sonden S1, S2 mit Fotozellen versehen auf welche ein Lichtstrahl fällt, wenn eine Lücke zwischen zwei Zähnen des Impulserzeugers Z in den Bereich der Sonden S1, S2 gelangt. Sobald ein Zahn des Impulserzeugers Z in den Bereich der Sonden S1, S2 gelangt, wird der Lichtstrahl abgedeckt und die Sonden befinden sich im Dunkeln. In der gezeigten Stellung befindet sich die Sonde S1 im Dunkeln und die Sonde S2 befindet sich im Bereich einer Zahnflanke, d.h. es erfolgt eine Schaltung, wobei je nach Drehrichtung des Impulserzeugers Z die Sonde S2 ins Dunkel gelangt oder vom Lichtstrahl getroffen wird. Der Abstand zwischen zwei entsprechenden Zahnflanken von zwei benachbarten Zähnen ist mit «t» bezeichnet. Dieser Abstand t entspricht einer Phase von 360° und der Abstand zwischen den beiden Sonden S1 und S2 enspricht einer Phasendifferenz von 270° oder allgemeiner 90° + n · 180°.

Die Sonde S1 ist an folgende Organe angeschlossen:

a) Über einen Verstärker V1 und einen Verzweigungspunkt A an den Takteingang 2 eines ersten Speichers Sp1.

b) Über Verstärker V1, Verzweigungspunkt A und über einen Inverter I1 an den Takteingang 2 eines zweiten Speichers Sp2.

c) Über Verstärker V1, die beiden Verzweigungspunkte A und A' an den Dateneingang 1 eines dritten Speichers Sp3 und an den Dateneingang 1 eines vierten Speichers Sp4.

d) Über Verstärker V1, die beiden Verzweigungspunkte A und A' an eine Umschaltlogik UL.

Die Sonde S2 ist an folgende Organe angeschlossen:

a) Über einen Verstärker V2 und zwei Verzweigungspunkte B und B' an den Takteingang 2 des dritten Speichers Sp3.

b) Über Verstärker V2, die beiden Verzweigungspunkte B und B' und über einen Inverter I2 an den Takteingang 2 des vierten Speichers Sp4.

c) Über Verstärker V2 den Verzweigungspunkt B an den Dateneingang 1 des ersten Speichers Sp1 und an den Dateneingang 1 des zweiten Speichers Sp2.

d) Über Verstärker V2 die beiden Verzweigungspunkte B und B' an die Umschaltlogik UL.

Diese Anschlüsse der Sonden S1 und S2 an die genannten Organe wird als erfindungswesentlich angesehen.

Der erste Speicher Sp1 ist mit seinem negierten Ausgang 4 und der zweite Speicher Sp2 ist mit seinem Ausgang 3 an einen ersten als EX–OR-Gatter ausgebildeten Vergleicher G1 angeschlossen. Ebenso ist der dritte Speicher Sp3 mit seinem negierten Ausgang 4 und der vierte Sepicher mit seinem Ausgang 3 an einen zweiten als EX–OR-Gatter ausgebildeten Vergleicher G2 angeschlossen.

Die beiden Vergleicher G1 und G2 sind an die Umschaltlogik UL angeschlossen.

Die Signale an den Ausgängen der beiden Vergleicher G1 und G2 geben die Informationen über die richtige Funktion der Sonden S1 und S2.

An die Umschaltlogik ist einerseits eine Steuerschaltung St, z.B. eine Gleitschutzvorrichtung, angeschlossen und anderseits ein Fehlermelder FM, der dem Fahrzeugführer anzeigt, z.B. optisch oder akustisch, dass eine der Sonden S1 oder S2 ausgefallen ist.

Die Wirkungsweise der beschriebenen Vorrichtung ist wie folgt:

A Wenn das Fahrzeug vorwärts fährt, dreht sich der Impulserzeuger derart, dass sich die Zähne des Impulserzeuges Z in Richtung des Pfeilers D abwärts bewegen.

1) Die Sonde S2 gelangt aus dem Dunkeln in den Bereich des Lichtstrahles, das von der Sonde S2 erzeugte Signal springt dabei von «logisch 0» auf «logisch 1».

1a) Die Sonde S1 befindet sich im Bereich eines Zahnes d.h. im Dunkeln, und das von der Sonde D1 erzeugte Signal verharrt auf «logisch 0».

2) Die Sonde S2 gelangt aus dem Bereich des Lichtstrahles ins Dunkle, das von der Sonde S2 erzeugte Signal springt dabei von «logisch 1» auf «logisch 0».

2a) Die Sonde S1 befindet sich im Bereich einer Zahnlücke, d.h. im Lichtstrahl und das von der Sonde S1 erzeugte Signal verharrt auf «logisch 1».

3. Die Sonde S1 gelangt aus dem Dunkeln in den Bereich des Lichtstrahles, das von der Sonde S1 erzeugte Signal springt dabei von «logisch 0» auf «logisch 1».

3a. Die Sonde S2 befindet sich im Bereich einer Zahnlücke, d.h. im Lichtstrahl und das von der Sonde S2 erzeugte Signal verharrt auf «logisch 1».

4. Die Sonde S1 gelangt aus dem Bereich des Lichtstrahles ins Dunkle, das von der Sonde S1 erzeugte Signal springt dabei von «logisch 1» auf «logisch 0».

4a. Die Sonde S2 befindet sich im Bereich eines Zahnes, d.h. im Dunkeln und das von der Sonde S2 erzeugte Signal verharrt auf «logisch 0».

B. Wenn das Fahrzeug rückwärts fährt, dreht sich das Zahnrad derart, dass sich die Zähne des Impulserzeugers Z entgegengesetzt zur Richtung des Pfeilers D aufwärts bewegen.

1. Die Sonde S2 gelangt aus dem Bereich des Lichtstrahles ins Dunkle, das von der Sonde S2 erzeugte Signal springt dabei von «logisch 1» auf «logisch 0».

1a. Die Sonde S1 befindet sich im Bereich eines Zahnes, d.h. im Dunkeln und das von der Sonde S1 erzeugte Signal verharrt auf «logisch 0».

2. Die Sonde S2 gelangt aus dem Dunkeln in den Bereich des Lichtstrahles, das von der Sonde S2 erzeugte Signal springt dabei von «logisch 0» auf «logisch 1».

2a. Die Sonde S1 befindet sich im Bereich einer Zahnlücke, d.h. im Lichtstrahl, und das von der Sonde S1 erzeugte Signal verharrt auf «logisch 1».

3. Die Sonde S1 gelangt aus dem Bereich des Lichtstrahles ins Dunkle, das von der Sonde S1 erzeugte Signal springt dabei von «logisch 1» auf «logisch 0».

3a. Die Sonde S2 befindet sich im Bereich einer Zahnlücke, d.h. im Lichtstrahl, und das von der Sonde S2 erzeugte Signal verharrt auf «logisch 1».

4. Die Sonde S1 gelangt aus dem Dunkeln in den Bereich des Lichtstrahles, das von der Sonde S1 erzeugte Signal springt dabei von «logisch 0» auf «logisch 1».

4a. Die Sonde S2 befindet sich im Bereich eines Zahnes, d.h. im Dunkeln, und das von der Sonde S2 erzeugte Singal verharrt auf «logisch 0».

Die obigen Ausführungen lassen sich wie folgt in einer Tabelle darstellen:

| Fahrtrichtung | | | | | | | |
|---|---|---|---|---|---|---|---|
| A vorwärts | | | | B rückwärts | | | |
| «springt» | | «verharrt» | | «springt» | | «verharrt» | |
| 1. | «0–1» | 1a. | «0» | 1. | «1–0» | 1a. | «0» |
| $S_2$ | | $S_1$ | | $S_2$ | | $S_1$ | |
| 2. | «1–0» | 2a. | «1» | 2. | «0–1» | 2a. | «1» |
| 3. | «0–1» | 3a. | «1» | 3. | «1–0» | 3a. | «1» |
| $S_1$ | | $S_2$ | | $S_1$ | | $S_2$ | |
| 4. | «1–0» | 4a. | «0» | 4. | «/–1» | 4a. | «0» |

Diese Signale werden nun von den Sonden S1 und S2 an die Speicher Sp1, Sp2, Sp3 und Sp4 wie folgt weitergeleitet:

A. Bei Vorwärtsfahrt dreht sich der Impulserzeuger Z in Richtung des Pfeiles D und die Sonde S2 wird wie folgt überwacht:

1. Die Sonde S1 leitet über Verzweigungspunkt A einen Signalsprung von «logisch 0» auf «logisch 1» an den Takteingang 2 des ersten Speichers Sp1 und über Inverter I1 einen Signalsprung von «logisch 1» auf «logisch 0» an den Takteingang 2 des zweiten Speichers Sp2.

2. Gleichzeitig leitet Sonde S2 über Verzweigungspunkt B ein Signal «logisch 1» an den Dateneingang 1 des ersten Speichers Sp1 und an den Dateneingang 1 des zweiten Speichers Sp2.

3. Somit erscheint am negierten Ausgang 4 des Speichers Sp1 das Signal «logisch 0» und am Ausgang 3 des Speichers Sp2 ist das Signal «logisch 0» geblieben.

4. Die Sonde S1 leitet über Verzweigungspunkt A einen Signalsprung von «logisch 1» auf «logisch 0» an den Takteingang 2 des ersten Speichers Sp1 und über Inverter I1 einen Signalsprung von «logisch 0» auf «logisch 1» an den Takteingang 2 des zweiten Speichers Sp2.

5. Gleichzeitig leitet Sonde S2 über Verzweigungspunkt B ein Singal «logisch 0» an den Dateneingang 1 des ersten Speichers Sp1 und an den Dateneingang 1 des zweiten Speichers Sp2.

6. Somit bleibt am negierten Ausgang 4 des Speichers Sp1 immer noch das Signal «logisch 0» und am Ausgang 3 des Speichers Sp2 erscheint wiederum das Signal «logisch 0».

Diese beiden Signale werden miteinander im Vergleicher G1 verglichen und da beide Signale gleich sind und somit die zu überwachende Sonde S2 richtig arbeitet, gelangt ein Signal «logisch 0» an die Umschaltlogik UL.

Ferner wird bei Vorwärtsfahrt die Sonde S1 wie folgt überwacht:

1. Die Sonde S2 leitet über die Verzweigungspunkte B und B' einen Signalsprung von «logisch 1» auf «logisch 0» an den Takteingang 2 des dritten Speichers Sp3 und über den Inverter I2 einen Signalsprung von «logisch 0» auf logisch 1» an den Takteingang 2 des vierten Speichers Sp4.

2. Gleichzeitig leitet Sonde S1 über die Verzweigungspunkte A und A' ein Singal «logisch 1» an den Dateneingang 1 des dritten Speichers Sp3 und an den Dateneingang 1 des vierten Speichers Sp4.

3. Somit bleibt am negierten Ausgang 4 des dritten Speichers Sp3 das Signal «logisch 1» und am Ausgang 3 des vierten Speichers Sp4 erscheint das Singal «logisch 1».

4. Die Sonde S2 leitet über die Verzweigungspunkte B und B' einen Signalsprung von «logisch 0» auf «logisch 1» an den Takteingang 2 des dritten Speichers Sp3 und über den Inverter I2 einen Signalsprung von «logisch 1» auf «logisch 0» an den Takteingang 2 des vierten Speichers Sp4.

5. Gleichzeitig leitet Sonde S1 über die Verzweigungspunkte A und A' ein Signal «logisch 0» an den Dateneingang 1 des dritten Speichers Sp3 und an den Dateneingang 1 des vierten Speichers Sp4.

6. Somit erscheint am negierten Ausgang 4 des dritten Speichers Sp3 wiederum das Signal «logisch 1» und am Ausgang 3 des vierten Speichers Sp4 bleibt das Signal «logisch 1».

Diese beiden Signale werden miteinander im Vergleicher G2 verglichen und da beide Signale gleich sind, und somit die zu überwachende Sonde S2 richtig arbeitet, gelangt ein Signal «logisch 0» an die Umschaltlogik UL.

B. Bei Rückwärtsfahrt spielt sich der Vorgang in umgekehrter Reihenfolge ab. Es scheint daher nicht erforderlich, diese Vorgänge nochmals aufzuführen.

Aus den obigen Ausführungen ist ersichtlich, dass die beiden Speicher Sp1 und Sp2 zur Überprüfung der Sonde S2 dienen, weil in dem durch die Sonde S1 bestimmten Zeitpunkt das von der Sonde S2 erzeugte Signal überwacht wird und dass die beiden Speicher Sp3 und Sp4 zur Überwachung der Sonde S1 dienen, weil in dem durch die Sonde S2 bestimmten Zeitpunkt das von der Sonde 1 erzeugte Signal überwacht wird.

Fällt eine der beiden Sonden S1 oder S2 aus, so ist die Umschaltlogik UL weiterhin in der Lage, ein Signal an die Steuerschaltung St abzugeben.

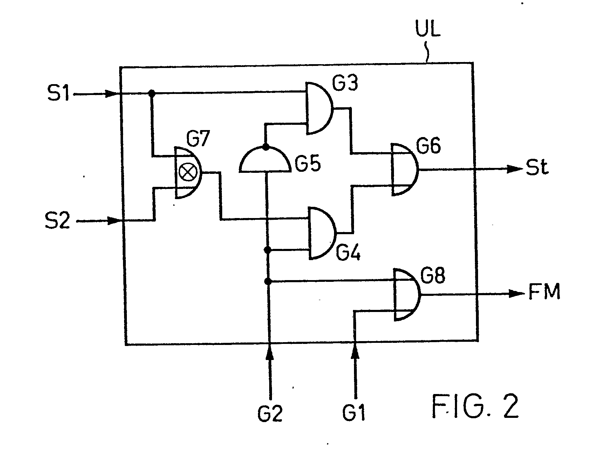

Der Aufbau der Umschaltlogik UL ist gemäss Fig. 2 wie folgt:

1. Die Sonde S1 ist einerseits über UND-Gatter G3 und ODER-Gatter G6 und anderseits über EX-ODER-Gatter G7, UND-Gatter G4 und ODER-Gatter G6 an die Steuerschaltung St angeschlossen.

2. Die Sonde S2 ist ausschliesslich über EX-ODER-Gatter G 7, UND-Gatter G4 und ODER-Gatter G 6 an die Steuerschaltung St angeschlossen.

3. Der Vergleicher G 2 ist einerseits direkt an das UND-Gatter G4 und über Inverter G5 an das UND-Gatter G3 angeschlossen, anderseits ist der Vergleicher G2 über ODER-Gatter G8 an einem Fehlermelder FM angeschlossen.

4. Der Vergleicher G1 ist ausschliesslich über ODER-Gatter G8 an den Fehlermelder FM angeschlossen.

Die Wirkungsweise dieser Umschaltlogik ist wie folgt:

Es werden drei Fälle angenommen

1. Fall: Sonde S1 und Sonde S2 funktionieren.

2. Fall: Nur Sonde S2 ist defekt.

3. Fall: Nur Sonde S1 ist defekt.

1. Fall: Von Sonde S1 gelangen regelmässig, abwechselnd die Signale «0» und «1» an die UND-Gatter G3 und G4. Von Sonde S2 gelangen regelmässig abwechselnd die Signale «0» und «1» an das UND-Gatter G4. Da kein Fehler gemeldet wird, gelangt vom Vergleicher G2 ein Signal «0» an das UND-Gatter G4 und über Inverter G5 ein Signal «1» an das UND-Gatter G3, somit gelangen Signale «0» und «1» ausschliesslich vom UND-Gatter G 3 über das ODER-Gatter G6 an die Steuerschaltung St.

2. Fall: Von Sonde S2 gelangt nur das Signal «0» an das UND-Gatter G4.

Von Sonde S1 gelangen regelmässig abwechselnd Signale «0» und «1» an das UND-Gatter G3.

Da von Sonde S1 kein Fehler gemeldet wird, gelangt vom Vergleicher G2 ein Signal «0» an das UND-Gatter G4 und über Inverter G5 ein Signal «1» an das UND-Gatter G3. Somit gelangen Signale «0» und «1» ausschliesslich vom UND-Gatter G3 über ODER-Gatter G6 an die Steuereinrichtung St.

Ausserdem gelangt ein Signal «1» vom Vergleicher G1 über ODER-Gatter G8 an den Fehlermelder FM und meldet, dass Sonde S2 defekt ist.

3. Fall: Von Sonde S1 gelangt nur das Signal «0» an das UND-Gatter G3.

Von Sonde S2 gelangen regelmässig abwechselnd Signale «0» und «1» an das UND-Gatter G4.

Da von Sonde S1 ein Fehler gemeldet wird, gelangt vom Vergleicher G2 ein Singal 1 and das UND-Gatter G4 und über Inverter G5 ein Signal «0» an UND-Gatter G3.

Somit gelangen Signale «0» und «1» ausschliesslich vom UND-Gatter G4 über das ODER-Gatter G6 an die Steuereinrichtung St.

Ausserdem gelangt ein Singal «1» vom Vergleicher G1 über ODER-Gatter G8 an den Fehlermelder FM und meldet, dass Sonde S1 defekt ist.

## Patentansprüche

1. Vorrichtung zum Überwachen eines Raddrehzahlgebers eines Fahrzeuges, insbesondere eines Schienenfahrzeuges, welcher einen ersten Impulsgeber (S1) zur Erzeugung einer ersten raddrehzahlproportionalen Impulsfolge sowie einen zweiten Impulsgeber (S2) zur Erzeugung einer zweiten raddrehzahlproportionalen Impulsfolge aufweist, welche gegen die erste Impulsfolge phasenverschoben ist, dadurch gekennzeichnet, dass zwei erste und zwei zweite getaktete Speicher-Flip-Flop (Sp1, Sp2, bzw. Sp3, Sp4) vorgesehen sind, dass der eine Impulsgeber (S1) an den Takteingängen (2) der beiden ersten getakteten Speicher-Flip-Flop (Sp1, Sp2) und an die Dateneingänge (1) der beiden zweiten getakteten Speicher-Flip-Flop (Sp3, Sp4) angeschlossen ist, dass der andere Impulsgeber (S2) an den Takteingängen (2) der beiden zweiten getakteten Speicher-Flip-Flop (Sp3, Sp4) und an die Dateneingänge (1) der beiden ersten getakteten Speicher-Flip-Flop (Sp1, Sp2) angeschlossen ist, wobei vor je einem der beiden Takteingänge (20) der ersten und zweiten getakteten Speicher-Flip-Flop (Sp1, Sp2, Sp3, Sp4) jeweils ein Inverter (I1, I2) angeordnet ist, und dass der eine Ausgang (3) jeweils eines der beiden ersten und der beiden zweiten getakteten Speicher-Flip-Flop (Sp2 und Sp4) und der negierte Ausgang (4) des jeweils anderen ersten und zweiten getakteten Speicher-Flip-Flops (Sp1 und Sp3) jeweils an einen Vergleicher (G1, G2) angeschlossen sind.

2. Vorrichtung nach Patentanspruch 1, dadurch gekennzeichnet, dass einerseits die beiden Impulsgeber (S1, S2) und anderseits die beiden Vergleicher (G1, G2) an eine Umschaltlogik (UL) angeschlossen sind, welche ein Ex-Oder-Gatter (G7) aufweist, an dessen Eingänge die Impulsgeber (S1, S2) angeschlossen sind, sowie zwei Und-Gatter (G3, G4), wobei an die Eingänge des ersten Und-Gatters (G3) der eine Impulsgeber (S1) und über einen Inverter (G5) der eine Vergleicher (G2) und an die Eingänge des zweiten Und-Gatters (G4) der Ausgang des Ex-Oder-Gatters (G7) und ebenfalls der eine Vergleicher (G2) angeschlossen sind, und dass die Umschaltlogik (UL) ferner ein erstes Oder-Gatter (G6) enthält, an dessen Eingänge die genannte beiden Und-Gatter (G3, G4) angeschlossen sind, sowie ein zweites Oder-Gatter (G8), an dessen Eingänge die beiden Vergleicher (G1, G2) angeschlossen sind.

## Claims

1. A device for monitoring a wheel-revolution transmitter of a vehicle, and particularly of a rail vehicle, which device is provided with a first pulse transmitter (S1) for generating a first wheel-revolution-proportional pulse sequence and with a second pulse transmitter (S2) for generating a second wheel-revolution-proportional pulse sequence which is phase-shifted with respect to the first pulse sequence, characterised in that two first and two second, clocked memory flip-flops (Sp1, Sp2 and Sp3, Sp4 respectively) are provided, that one pulse transmitter (S1) is connected to the clock inputs (2) of the two first clocked memory flip-flops (Sp1, Sp2) and to the data inputs (1) of the two second clocked memory flip-flops (Sp3, Sp4), that the other pulse transmitter (S2) is connected to the clock inputs (2) of the two second clocked memory flip-flops (Sp3, Sp4) and to the data inputs (1) of the two first clocked memory flip-flops (Sp1, Sp2), an inverter (I1, I2) being arranged in each case in front of each one of the two clock inputs (20) of the first and second clocked memory flip-flops (Sp1, Sp2, Sp3, Sp4), and that one output (3) of in each case one of the two first and of the two second clocked memory flip-flops (Sp2 and Sp4) and the negated output (4) of in each case the other first and second clocked memory flip-flop (Sp1 and Sp3) are connected in each case to a comparator (G1, G2).

2. A device according to Claim 1, characterised in that, on the one hand, the two pulse transmitters (S1, S2) and, on the other hand, the two comparators (G1, G2) are connected to a switching logic (UL) which is provided with an EX–OR gate (G7), to the inputs of which the pulse transmitters (S1, S2) are connected, and with two AND gates (G3, G4), one pulse transmitter (S1) and, via an inverter (G5), one comparator (G2) being connected to the inputs of the first AND gate (G3), and the output of the EX–OR gate (G7) and also the one comparator (G2) being connected to the inputs of the second AND gate (G4), and that the switching logic (UL) also contains a first OR gate (G6), to the inputs of which are connected the said two AND gates (G3, G4), and a second OR gate (G8) to the inputs of which are connected the two comparators (G1, G2).

## Revendications

1. Dispositif de surveillance pour un capteur du nombre de tours d'une roue d'un véhicule, notamment d'un véhicule sur rails, dispositif comportant un premier émetteur d'impulsions (S1) pour obtenir une première succession d'impulsions proportionnelle au nombre de tours d'une roue, ainsi qu'un second émetteur d'impulsions (S2) pour obtenir une seconde succession d'impulsions proportionnelle au nombre de tours d'une roue, décalée en phase par rapport à la première succession d'impulsions, dispositif caractérisé en ce qu'il est prévu deux premières bascules à mémoire et deux secondes bascules à mémoire (Sp1, Sp2 ou bien Sp3, Sp4), synchronisées, le premier émetteur d'impulsions (S1) étant raccordé aux entrées de synchronisation (2) des deux premières bascules synchronisées à mémoire (Sp1, Sp2) et aux entrées de données (1) des deux secondes bascules synchronisées à mémoire (Sp3, Sp4), l'autre émetteur d'impulsions (S2) étant raccordé aux entrées de synchronisation (2) des deux secondes bascules synchronisées à mémoire (Sp3, Sp4) et aux entrées de données (1) des deux premières bascules synchronisées à mémoire (Sp1, Sp2), tandis qu'un inverseur (I1, I2) est respectivement disposé en amont de chacune des deux entrées de synchronisation (2) des premières et des secondes bascules synchronisées à mémoire (Sp1, Sp2, Sp3, Sp4) et que l'une (3) des sorties de respectivement une des deux premières et des deux secondes bascules synchronisées à mémoire (Sp2 et Sp4) ainsi que la sortie négative (4) de respectivement l'autre première et seconde bascule synchronisée à mémoire (Sp1 et Sp3) sont respectivement raccordées à un comparateur (G1, G2).

2. Dispositif selon la revendication 1, caractérisé en ce que, d'une part, les deux émetteurs d'impulsions (S1, S2) et, d'autre part, les deux comparateurs (G1, G2) sont raccordés à une logique de commutation (UL), qui comporte une porte exclusive OU (G7) aux entrées de laquelle sont raccordés les émetteurs d'impulsions (S1, S2) et qui comporte également deux portes ET (G3, G4), l'un (S1) des émetteurs d'impulsions et, par l'intermédiaire d'un inverseur (G5), l'un (G2) des comparateurs étant raccordé aux entrées de la première porte ET (G3), tandis que la sortie de la porte exclusive OU (G7) et également l'un (G2) des comparateurs, sont raccordés aux entrées de la seconde porte ET (G4), la logique de commutation (UL) comportant, en outre, une première porte OU (G6), aux entrées de laquelle sont raccordées les deux portes ET précitées (G3, G4), et elle comporte également une seconde porte OU (G8), aux entrées de laquelle sont raccordés les deux comparateurs (G1, G2).

FIG. 1

St | FM

UL

G2 ⊗

Sp 3   4

Sp 4   3

A'   B'   I2   A   I1   B

V1   V2

1 2   1 2

S1   S2

Sp 1   4

Sp 2   3

G1 ⊗

t

D

Z

UL

S1

G7

S2

G3

G5

G6

St

G4

G8

FM

G2        G1        F.IG. 2